# EUROPEAN PATENT APPLICATION

(11) **EP 4 524 425 A1**
(43) Date of publication of application: **19.03.2025**
(21) Application number: 23803327.8
(22) Date of filing: 12.04.2023
(51) Int. Cl.: F16H 1/32, E02F 9/00, H02K 7/116

(54) **SPEED REDUCER, DRIVING DEVICE, AND CONSTRUCTION MACHINE**

(30) Priority: 13.05.2022 JP 2022079678
(71) Applicant: Nabtesco Corporation, Tokyo 102-0093 (JP)
(72) Inventor: TAKAHASHI Masahiro, Tokyo 102-0093 (JP)
(74) Representative: Grünecker Patent- und Rechtsanwälte PartG mbB
(86) International application number: PCT/JP2023/014891
(87) International publication number: WO 2023/218845

(57) **Abstract**

A speed reducer 10 according to an embodiment includes: a carrier 11; a first case 20 encircling an outer circumferential surface of the carrier 11 between two end surfaces of the carrier 11, the first case 20 being held by the carrier 11 between the two end surfaces of the carrier 11 so as to rotate relative to the carrier 11; a second case 30 encircling the outer circumferential surface of the carrier 11, the second case 30 being held by the carrier 11 at a different position between the two end surfaces of the carrier 11 than the first case 20 so as to rotate relative to the carrier 11; a first reduction portion 40 including a first input portion, the first input portion being held by the carrier 11 and configured to receive rotation input from a first side FS toward which one of the two end surfaces of the carrier 11 faces; and a second reduction portion 50 including a second input portion, the second input portion being held by the carrier 11 and configured to receive rotation input from a second side SS toward which another of the two end surfaces of the carrier 11 faces.

## Description

### TECHNICAL FIELD

The present invention relates to a speed reducer, a drive device, and a construction machine.

### BACKGROUND

Demand for electric-powered construction machine is increasing. For example, electric-powered excavators are already in practical use. An excavator is equipped with working elements including a boom, arm and bucket. When these working elements are operated by an electric motor, the electric motor may be arranged so that, for example, the rotating shaft integrated with the bucket and the drive shaft of the electric motor are coaxial. The drive shaft of the electric motor may then rotate the rotating shaft of the bucket via a speed reducer.

In the above configuration, the electric motor and the speed reducer may be arranged in the bucket. However, this arrangement reduces the volume of the bucket and decreases the efficiency of the excavation operation. When the electric motor and the speed reducer are located outside the bucket, the electric motor and the speed reducer are more prone to contact with the ground or structure on which the bucket is working. This increases the risk of damage to the electric motor and the speed reducer.

On the other hand, it is also possible that the electric motor for the arm is arranged so that the drive shaft of the electric motor for the arm is coaxial with the rotating shaft provided at the proximal end of the arm connected to the distal end of the boom, the rotating shaft of the arm is connected to the drive shaft of the electric motor for the arm via a speed reducer, and the electric motor for the bucket is arranged adjacent to the electric motor for the arm. In addition, the drive shaft of the electric motor for the bucket may rotate the bucket, which is connected via a speed reducer and a link mechanism.

### RELEVANT REFERENCE

### LIST OF RELEVANT PATENT LITERATURE

Patent Literature 1: Japanese Patent Application Publication No. Hei 11-343642

### SUMMARY

In the configuration in which the electric motor for the arm and the electric motor for the bucket are arranged adjacent to each other, the electric motor for the arm transmits torque to the arm at the connection point between the distal end of the boom and the proximal end of the arm connected thereto, and the electric motor for the bucket transmits torque to the bucket from the vicinity of the connection point. In this case, the electric motor for the bucket is separated from the bucket, thus eliminating the problems such as the reduced volume of the bucket mentioned above.

However, although the electric motor for the arm and the electric motor for the bucket are arranged together, a large region is occupied by the electric motor for the arm and the speed reducer connected thereto and the electric motor for the bucket and the speed reducer connected thereto. In this case, for example, the electric motor for the arm and the electric motor for the bucket protrude significantly from the arm, increasing the risk of damage to the electric motor for the arm and the electric motor for the bucket. On the other hand, when the motor and the speed reducer have a smaller size, it is possible that the desired torque cannot be transmitted.

The present invention addresses the above problems, and an object of the present invention is to provide a speed reducer, a drive device, and a construction machine having a reduced size and capable of transmitting torque to multiple members separately and facilitating the transmission of the desired torque.

A speed reducer according to an embodiment comprises: a carrier; a first case encircling an outer circumferential surface of the carrier between two end surfaces of the carrier, the first case being held by the carrier between the two end surfaces of the carrier so as to rotate relative to the carrier; a second case encircling the outer circumferential surface of the carrier, the second case being held by the carrier at a different position between the two end surfaces of the carrier than the first case so as to rotate relative to the carrier; a first reduction portion including a first input portion, the first input portion being held by the carrier and configured to receive rotation input from a first side toward which one of the two end surfaces of the carrier faces, the first reduction portion being configured to reduce the rotation input to the first input portion and output the reduced rotation to the first case; and a second reduction portion including a second input portion, the second input portion being held by the carrier and configured to receive rotation input from a second side toward which another of the two end surfaces of the carrier faces, the second reduction portion being configured to reduce the rotation input to the second input portion and output the reduced rotation to the second case.

It is also possible that a first rotation axis of the first case that rotates relative to the carrier and a second rotation axis of the second case that rotates relative to the carrier are aligned with each other.

It is also possible that the first case is located between the two end surfaces of the carrier, and the second case is located between the two end surfaces of the carrier.

It is also possible that the carrier includes a first carrier half and a second carrier half that are separably connected, the first carrier half holding the first reduction portion, the second carrier half holding the second reduction portion.

It is also possible that the first carrier half includes a first flange extending from a gap between the first case and the second case in a radially outward direction of the first case relative to the first case and in a radially outward direction of the second case relative to the second case, the second carrier half includes a second flange extending from the gap between the first case and the second case in the radially outward direction of the first case relative to the first case and in the radially outward direction of the second case relative to the second case, and the first carrier half and the second carrier half are connected together by a fastening member that extends from the first flange to the second flange.

It is also possible that a part of the carrier is exposed through a gap between the first case and the second case.

It is also possible that the first case includes a first mounting portion located between the one of the end surfaces of the carrier and a surface of the first case facing toward the second case, the first mounting portion receiving a predetermined member mounted thereto, and the second case includes a second mounting portion located between the other of the end surfaces of the carrier and a surface of the second case facing toward the first case, the second mounting portion receiving a predetermined member mounted thereto.

A speed reducer according to an embodiment may further comprise a seal provided between the first case and the second case.

It is also possible that the first input portion is a shaft member or a driven gear supported by the carrier.

A drive device according to an embodiment comprises: the speed reducer; a first motor configured to input rotation to the first input portion of the first reduction portion; and a second motor configured to input rotation to the second input portion of the second reduction portion.

A construction machine according to an embodiment comprises a working element including the speed reducer. It is also possible that the working element includes a first portion, a second portion, and a third portion, the first portion holds the speed reducer, the second portion is mounted to the first case, and the third portion is rotatably supported by the second portion, and the third portion is connected to the second case via a link device.

A construction machine according to an embodiment comprises: the speed reducer; and a working element connected to the speed reducer. It is also possible that the working element includes a one-side portion and an other-side portion, the one-side portion being mounted to the first case and extending in a radially outward direction of the first case, the other-side portion being rotatably supported by the one-side portion, and the other-side portion is connected to the second case via a link device.

The present invention makes it possible to have a reduced size, transmit torque to multiple members separately, and facilitate the transmission of the desired torque.

### BRIEF DESCRIPTION OF THE DRAWINGS

Fig. 1 is a sectional view of a drive device including a speed reducer according to a first embodiment.
Fig. 2 is a sectional view of a drive device including a speed reducer according to a second embodiment.
Fig. 3 is a sectional view of a drive device including a speed reducer according to a third embodiment.
Fig. 4 illustrates a construction machine including the drive device according to the first embodiment.
Fig. 5 illustrates another construction machine including the drive device according to the first embodiment.

### DESCRIPTION OF THE PREFERRED EMBODIMENTS

Embodiments of the invention will be hereinafter described.

### <First Embodiment>

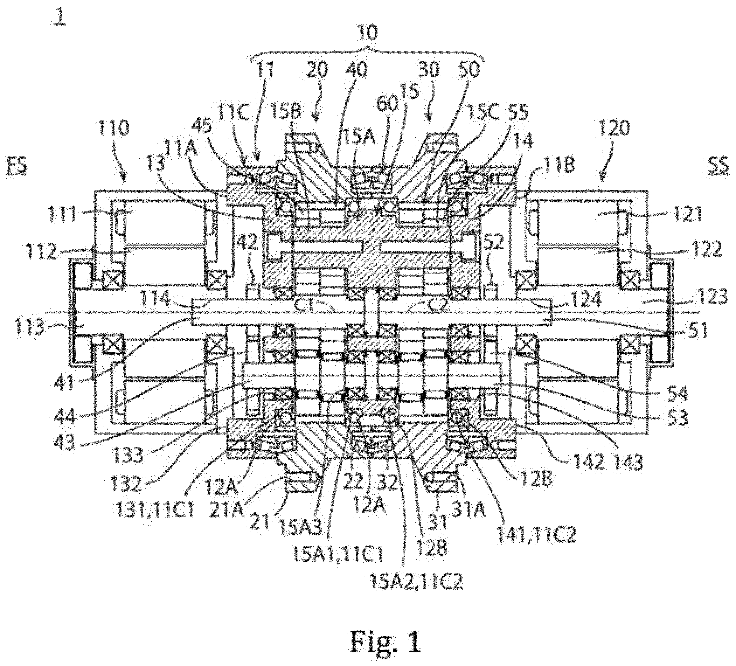

Fig. 1 shows a drive device 1 including a speed reducer 10 according to a first embodiment. The drive device 1 includes the speed reducer 10, a first motor 110, and a second motor 120.

The speed reducer 10 includes a carrier 11, a first case 20, a second case 30, a first reduction portion 40, and a second reduction portion 50. The first case 20 and the second case 30 are held by the carrier 11 so as to rotate relative to the carrier 11. The first reduction portion 40 is connected to the first motor 110. The second reduction portion 50 is connected to the second motor 120.

The first reduction portion 40 receives rotation input from the first motor 110. The first reduction portion 40 reduces the input rotation and outputs the reduced rotation to the first case 20. This causes the first case 20 to rotate relative to the carrier 11. The second reduction portion 50 receives rotation input from the second motor 120. The second reduction portion 50 reduces the input rotation and outputs the reduced rotation to the second case 30. This causes the second case 30 to rotate relative to the carrier 11.

The carrier 11 includes a first end surface 11A, a second end surface 11B opposite to the first end surface 11A, and an outer circumferential surface 11C located between the first end surface 11A and the second end surface 11B. The outer circumferential surface 11C includes a first support surface 11C1 that is circular in cross section and a second support surface 11C2 that is circular in cross section. A first bearing 12A is fitted to the first support surface 11C1. A second bearing 12B is fitted to the second support surface 11C2.

The first bearing 12A includes an inner ring, an outer ring, and a plurality of rolling elements held between the inner ring and the outer ring. The first case 20 has a tubular or annular shape. The inner circumferential surface of the first case 20 is fitted to the outer ring of the first bearing 12A. This allows the first case 20 to be held by the carrier 11 so as to rotate relative to the carrier 11.

The second bearing 12B includes an inner ring, an outer ring, and a plurality of rolling elements held between the inner ring and the outer ring. The second case 30 has a tubular or annular shape. The inner circumferential surface of the second case 30 is fitted to the outer ring of the second bearing 12B. This allows the second case 30 to be held by the carrier 11 so as to rotate relative to the carrier 11.

The first case 20 and the second case 30 are held by the carrier 11 at different positions between the two end surfaces of the carrier 11 (the first end surface 11A and the second end surface 11B), so as to rotate relative to the carrier 11. Specifically, the first case 20 is held at a position closer to the first end surface 11A of the carrier 11 than is the second case 30. The second case 30 is held at a position closer to the second end surface 11B of the carrier 11 than is the first case 20.

The sign C1 in Fig. 1 denotes the first rotation axis of the first case 20 relative to the carrier 11. The sign C2 denotes the second rotation axis of the second case 30 relative to the carrier 11. The first rotation axis C1 passes through the center of the first support surface 11C1 and the first bearing 12A. The second rotation axis C2 passes through the center of the second support surface 11C2 and the second bearing 12B.

The first rotation axis C1 of the first case 20 and the second rotation axis C2 of the second case 30 are aligned with each other. In other words, the first case 20 and the second case 30 are coaxial. It is also possible that the first rotation axis C1 of the first case 20 and the second rotation axis C2 of the second case 30 are parallel to but offset from each other. It is also possible that the first rotation axis C1 of the first case 20 and the second rotation axis C2 of the second case 30 intersect with each other.

The first end surface 11A herein refers to the surface of the carrier 11 that faces the opposite side to the second case 30 in the axial direction of the first case 20 in which the first rotation axis C1 extends, and thus the first end surface 11A faces the outside of the carrier 11. The second end surface 11B refers to the surface of the carrier 11 that faces the opposite side to the first case 20 in the axial direction of the second case 30 in which the second rotation axis C2 extends, and thus the second end surface 11B faces the outside of the carrier 11.

As a term to describe a position relative to the carrier 11, a first side FS herein refers to the side faced by the first end surface 11A of the carrier 11. A second side SS refers to the side faced by the second end surface 11B of the carrier 11.

In this embodiment, the first end surface 11A includes portions offset from each other in the axial direction of the first case 20, and by way of an example, these two portions are connected by a connecting surface extending in the axial direction of the first case 20. The second end surface 11B has the same shape as the first end surface 11A. However, it is also possible that each of the first end surface 11A and the second end surface 11B is a surface extending in one plane.

The carrier 11 includes a first end plate 13, a second end plate 14, and a connecting portion 15 that connects the first and second end plates 13 and 14. The connecting portion 15 includes a base portion 15A located between the first and second end plates 13 and 14, a first column portion 15B extending from the base portion 15A toward the first end plate 13, and a second column portion 15C extending from the base portion 15A toward the second end plate 14. In this embodiment, the base portion 15A, the first column portion 15B, and the second column portion 15C are formed of a single member. In other words, the base portion 15A, the first column portion 15B, and the second column portion 15C are constructed as a single seamless component. The base portion 15A, the first column portion 15B, and the second column portion 15C may be formed in one piece, for example, by casting.

The first end plate 13, the second end plate 14, and the base portion 15A in the connecting portion 15 are each generally cylindrical or annular. The first end plate 13, the second end plate 14, and the base portion 15A may be a solid cylinder or disc, depending on the specifications, particularly those for the first reduction portion 40 and the second reduction portion 50.

The first end plate 13 includes the first end surface 11A. The second end plate 14 includes the second end surface 11B. The first support surface 11C1 of the carrier 11 that supports the first case 20 described above extends from the first end plate 13 to the base portion 15A in the connecting portion 15. The second support surface 11C2 of the carrier 11 that supports the second case 30 described above extends from the second end plate 14 to the base portion 15A in the connecting portion 15.

The first support surface 11C1 includes an outer support surface 131 of the first end plate 13 and an inner support surface 15A1 of the base portion 15A. The first bearing 12A described above is provided in two pieces. One of the two first bearings 12A is fitted to the outer support surface 131, and the other is fitted to the inner support surface 15A1. The second support surface 11C2 of the carrier 11 includes an outer support surface 141 of the second end plate 14 and an inner support surface 15A2 of the base portion 15A. The second bearing 12B described above is provided in two pieces. One of the two second bearings 12B is fitted to the outer support surface 141, and the other is fitted to the inner support surface 15A2.

The first end plate 13 includes a first motor mounting portion 132 formed on the first end surface 11A. The first motor mounting portion 132 connects the first motor 110 to the carrier 11. The first motor mounting portion 132 is formed on the outer circumferential part of the first end surface 11A. The first motor mounting portion 132 may have a hole that receives a fastening member penetrating a part of the first motor 110. The second end plate 14 includes a second motor mounting portion 142. The second motor mounting portion 142 connects the second motor 120 to the carrier 11. The second motor mounting portion 142 has the same configuration as the first motor mounting portion 132, except that they are formed at different positions.

The connecting portion 15 is connected to the first end plate 13 by a fastening member that is inserted through the first end surface 11A of the first end plate 13 and extends from the first end plate 13 to the first column portion 15B. The connecting portion 15 is connected to the second end plate 14 by a fastening member that is inserted through the second end surface 11B of the second end plate 14 and extends from the second end plate 14 to the second column portion 15C.

The connecting portion 15 includes a plurality of first column portions 15B and a plurality of second column portions 15C. The plurality of first column portions 15B are spaced apart in the circumferential direction of the base portion 15A on the surface of the base portion 15A facing the first end plate 13. The plurality of second column portions 15C are spaced apart in the circumferential direction of the base portion 15A on the surface of the base portion 15A facing the second end plate 14. Any of the plurality of first column portions 15B is aligned with any of the plurality of second column portions 15C.

The surface of the base portion 15A facing the first end plate 13 and the surface of the base portion 15A facing the second end plate 14 have, at a position where the column portions 15B, 15C are not formed, an inner crankshaft support hole 15A3 that penetrates the base portion 15A. The first end plate 13 has a first outer crankshaft support hole 133 that faces the inner crankshaft support hole 15A3. The second end plate 14 has a second outer crankshaft support hole 143 that faces the inner crankshaft support hole 15A3.

The inner crankshaft support hole 15A3 and the first outer crankshaft support hole 133 rotatably support, via bearings, a first crankshaft 43 (described later) which is inserted in each of these holes. The first crankshaft 43 is a constituent of the first reduction portion 40. The inner crankshaft support hole 15A3 and the second outer crankshaft support hole 143 rotatably support, via bearings, a second crankshaft 53 (described later) which is inserted in each of these holes. The second crankshaft 53 is a constituent of the second reduction portion 50.

As described above, the first end plate 13, the second end plate 14, and the base portion 15A in the connecting portion 15 are each generally cylindrical or annular. The inner circumferential surface of the first end plate 13 and the inner circumferential surface of the base portion 15A form a support hole that rotatably supports, via bearings, a first center shaft 41 (described later) which is a constituent of the first reduction portion 40. The inner circumferential surface of the second end plate 14 and the inner circumferential surface of the base portion 15A form a support hole that rotatably supports, via bearings, a second center shaft 51 (described later) which is a constituent of the second reduction portion 50.

The respective centerlines of the inner crankshaft support hole 15A3, the first outer crankshaft support hole 133, and the second outer crankshaft support hole 143 are parallel to the first rotation axis C1 and the second rotation axis C2. The respective centerlines of the inner circumferential surface of the first end plate 13, the inner circumferential surface of the base portion 15A, and the inner circumferential surface of the second end plate 14 are also parallel to the first rotation axis C1 and the second rotation axis C2.

The first case 20 has a cylindrical shape. The first case 20 is held by the first support surface 11C1 in the outer circumferential surface 11C of the carrier 11 described above, so as to rotate relative to the carrier 11. In this state, the first case 20 encircles a part of the outer circumferential surface 11C of the carrier 11. In this embodiment, the first case 20 is located between the first end surface 11A and the second end surface 11B of the carrier 11. Thus, the first case 20 does not project from the first end surface 11A of the carrier 11 toward the first side FS. The first case 20 does not project from the second end surface 11B of the carrier 11 toward the second side SS. In addition, the first case 20 does not overlap the second case 30 in the radial direction of the second case 30. In other words, the first case 20 does not face any part of the second case 30 in the radial direction of the second case 30.

The first case 20 includes a first mounting portion 21 that includes a fastening hole 21A extending parallel to the first rotation axis C1. The first mounting portion 21 can hold, for example, arm members or link members fixed thereto. The first mounting portion 21 is provided on the outer circumferential part of the first case 20. The first mounting portion 21 is located between the first end surface 11A of the carrier 11 and the surface of the first case 20 facing toward the second case 30. Thus, the first mounting portion 21 does not project from the first end surface 11A of the carrier 11 toward the first side FS. The first mounting portion 21 does not overlap the second case 30 in the radial direction of the second case 30. In other words, the first mounting portion 21 does not face any part of the second case 30 in the radial direction of the second case 30.

The second case 30 also has a cylindrical shape. The second case 30 is held by the second support surface 11C2 in the outer circumferential surface 11C of the carrier 11 described above, so as to rotate relative to the carrier 11. In this state, the second case 30 encircles a part of the outer circumferential surface 11C of the carrier 11. Specifically, the second case 30 encircles a different part of the outer circumferential surface 11C of the carrier 11 than the first case 20.

In this embodiment, the second case 30 is located between the first end surface 11A and the second end surface 11B of the carrier 11. Thus, the second case 30 does not project from the second end surface 11B of the carrier 11 toward the second side SS. The second case 30 does not project from the first end surface 11A of the carrier 11 toward the first side FD. In addition, the second case 30 does not overlap the first case 20 in the radial direction of the first case 20. In other words, the second case 30 does not face any part of the first case 20 in the radial direction of the first case 20.

The second case 30 includes a second mounting portion 31 that includes a fastening hole 31A extending parallel to the second rotation axis C2. The second mounting portion 31 can hold, for example, arm members or link members fixed thereto. The second mounting portion 31 is provided on the outer circumferential part of the second case 30. The second mounting portion 31 is located between the second end surface 11B of the carrier 11 and the surface of the second case 30 facing toward the first case 20. Thus, the second mounting portion 31 does not project from the second end surface 11B of the carrier 11 toward the second side SS. The second mounting portion 31 does not overlap the first case 20 in the radial direction of the first case 20. In other words, the second mounting portion 31 does not face any part of the first case 20 in the radial direction of the first case 20.

A seal 60 is provided between the first case 20 and the second case 30. The seal 60 is sandwiched between the mutually facing surfaces of the first case 20 and the second case 30. Specifically, the end surface of the first case 20 facing toward the second case 30 and the end surface of the second case 30 facing toward the first case 20 face toward each other. The end surface of the first case 20 facing toward the second case 30 has a first groove 22 that extends over the entire circumference of the first case 20. The end surface of the second case 30 facing toward the first case 20 has a second groove 32 that extends over the entire circumference of the second case 30. The seal 60 is partly received in the first groove 22 and partly received in the second groove 32. Thus, the seal 60 is held between the first case 20 and the second case 30 so as to extend from the first groove 22 to the second groove 32.

The seal 60 has a generally annular shape. The seal 60 may be formed of a floating seal, as shown in Fig. 1. In this case, the seal 60 includes a pair of seal rings and a pair of O-rings. One of the pair of seal rings and one of the pair of O-rings are received in the first groove 22, and the other of the pair of seal rings and the other of the pair of O-rings are received in the second groove 32. The seal rings are shaped like a wedge. The seal ring received in the first groove 22 is positioned so that its sloped surface faces the inner surface of the first groove 22, and the O-ring is held between the inner surface of the first groove 22 and the sloped surface of the seal ring. The seal ring and the O-ring received in the second groove 32 are arranged in the same manner as for the first groove 22. The seal ring received in the first groove 22 and the seal ring received in the second groove 32 butt against each other. The seal 60 can have any configuration that allows independent rotation of each of the first case 20 and second case 30.

By way of an example, the speed reducer 10 is configured as an eccentric oscillating speed reducer. Thus, the first reduction portion 40 and the second reduction portion 50 each include an eccentric oscillating gear.

The first reduction portion 40 includes a first center shaft 41, a first input gear 42, a first crankshaft 43, a first relay gear 44, and a first external gear 45 serving as an eccentric oscillating gear.

The first center shaft 41 is rotatably held via bearings on the inner circumferential surface of the first end plate 13 and the inner circumferential surface of the base portion 15A. The first center shaft 41 projects from the first end surface 11A of the carrier 11 toward the first side FS. The first input gear 42 is provided on the part of the first center shaft 41 that projects from the first end surface 11A.

The first crankshaft 43 is rotatably held via bearings on the inner crankshaft support hole 15A3 in the first end plate 13 and the first outer crankshaft support hole 133 in the connecting portion 15. The first crankshaft 43 projects from the first end surface 11A of the carrier 11 toward the first side FS. The first relay gear 44 is provided on the part of the first crankshaft 43 that projects from the first end surface 11A. The first relay gear 44 meshes with the first input gear 42. The first external gear 45 is provided on the part of the first crankshaft 43 located between the first end plate 13 and the base portion 15A of the connecting portion 15. The first external gear 45 meshes with an internal gear provided on the inner circumferential surface of the first case 20.

In this embodiment, the first center shaft 41 is connected to the first motor 110. The first center shaft 41 corresponds to the first input portion in the present invention, which is held by the carrier 11 and receives rotation input from the first side FS.

The second reduction portion 50 includes a second center shaft 51, a second input gear 52, a second crankshaft 53, a second relay gear 54, and a second external gear 55 serving as an eccentric oscillating gear. Among these components, the second center shaft 51 is connected to the second motor 120. The second center shaft 51 corresponds to the second input portion in the present invention, which is held by the carrier 11 and receives rotation input from the second side SS. The components of the second reduction portion 50 are the same as those of the first reduction portion 40 (41-45). The components of the second reduction portion 50 are disposed on and held by the carrier 11 in the same manner as in the first reduction portion 40, except that their positions differ from those of the components of the first reduction portion 40, and thus detailed descriptions of the components of the second reduction portion 50 are omitted.

Although the speed reducer 10 according to the present invention is an eccentric oscillating speed reducer designed such that the crankshafts are offset from the rotational center of the cases, the speed reducer 10 may be configured as a crank-centered eccentric oscillating speed reducer. The speed reducer 10 may also be configured as a planetary-geared speed reducer. In this case, the first reduction portion 40 may include a planetary gear that rotates by the rotation input to the first input portion, which is composed of a shaft member that rotates integrally with the sun gear, for example. The planetary gear revolves around the first rotation axis C1 of the first case 20 while rotating, and meshes with the internal gear provided on the inner circumferential surface of the first case 20.

The first motor 110 is an electric motor. The first motor 110 includes a stator 111, a rotor 112, and a rotating shaft 113 mounted to the rotor 112. The first motor 110 is mounted to the first motor mounting portion 132 in the carrier 11. The rotor 112 and the rotating shaft 113 are located inside the stator 111 having a tubular shape. The rotor 112 and the rotating shaft 113 rotate integrally relative to the stator 111. The rotating shaft 113 has a hole 114 extending axially from its end surface. A portion of the outer circumferential surface of the first center shaft 41 constituted by a shaft member is fitted into the hole 114. The hole 114 and the first center shaft 41 are connected so that they do not rotate relative to each other. This causes the first center shaft 41 to rotate as the first motor 110 rotates.

The second motor 120 is also an electric motor. The second motor 120 includes a stator 121, a rotor 122, and a rotating shaft 123 mounted to the rotor 122. The second motor 120 is mounted to the second motor mounting portion 142 in the carrier 11. The rotor 122 and the rotating shaft 123 are located inside the stator 121 having a tubular shape. The rotor 122 and the rotating shaft 123 rotate integrally relative to the stator 121. The rotating shaft 123 has a hole 124 extending axially from its end surface. A portion of the outer circumferential surface of the second center shaft 51 constituted by a shaft member is fitted into the hole 124. The hole 124 and the second center shaft 51 are connected so that they do not rotate relative to each other. This causes the second center shaft 51 to rotate as the second motor 120 rotates.

The following is an example of operation of the drive device 1.

For example, the carrier 11 is fixed to other members at the first end plate 13 and the second end plate 14. With this configuration, when the rotating shaft 113 of the first motor 110 rotates, the rotation is input to the first center shaft 41. The rotation input to the first center shaft 41 is transmitted to the first crankshaft 43 via the first input gear 42 and the first relay gear 44, causing the first crankshaft 43 to rotate. The first crankshaft 43 then oscillatorily rotates the first external gear 45. The first external gear 45 outputs to the first case 20 reduced rotation compared to the input rotation. This causes the first case 20 to rotate relative to the carrier 11.

When the rotating shaft 123 of the second motor 120 rotates, the rotation is input to the second center shaft 51. The rotation input to the second center shaft 51 is transmitted to the second crankshaft 53 via the second input gear 52 and the second relay gear 54, causing the second crankshaft 53 to rotate. The second crankshaft 53 then oscillatorily rotates the second external gear 55. The second external gear 55 outputs to the second case 30 reduced rotation compared to the input rotation. This causes the second case 30 to rotate relative to the carrier 11.

In the embodiment described above, the first case 20 and the second case 30 are held on the same outer surface 11C of the carrier 11. This reduces the region occupied by the speed reducer 10 compared to the case where a dedicated carrier is provided for each of the first case 20 and the second case 30. In addition, the first reduction portion 40 and the second reduction portion 50 separately rotate the first case 20 and the second case 30 relative to the carrier 11, thereby separately transmitting torque from the first case 20 and the second case 30 to different members. Further, the first center shaft 41, corresponding to the first input portion through which the first reduction portion 40 receives rotation input from the outside, and the second center shaft 51, corresponding to the second input portion through which the second reduction portion 50 receives rotation input from the outside, are separated on the carrier 11. This arrangement eliminates, for example, the large constraints on the size of the first motor 110 connected to the first center shaft 41 and the size of the second motor 120 connected to the second center shaft 51. Thus, the speed reducer 10 can be connected, for example, to the first motor 110 and the second motor 120 with a large size that can provide a large output. Accordingly, it is possible to reduce the size, transmit torque to multiple members separately, and facilitate the transmission of the desired torque.

The first rotation axis C1 of the first case 20 that rotates relative to the carrier 11 and the second rotation axis C2 of the second case 30 that rotates relative to the carrier 11 are aligned with each other. In this case, the carrier 11 can have a less complex shape for holding the first case 20 and the second case 30. The first case 20 is located between the two end surfaces of the carrier 11, and the second case 30 is located between the two end surfaces of the carrier 11. This arrangement can minimize the increase in the size of the speed reducer 10.

The first case 20 includes the first mounting portion 21 located between the first end surface 11A of the carrier 11 and the surface of the first case 20 facing toward the second case 30. The first mounting portion 21 receives a predetermined member mounted thereto. The second case 30 includes the second mounting portion 31 located between the second end surface 11B of the carrier 11 and the surface of the second case 30 facing toward the first case 20. The second mounting portion 31 receives a predetermined member mounted thereto. This configuration minimizes the unbalance of the loads applied to the first reduction portion 40 and the second reduction portion 50 when a predetermined member is mounted to the first mounting portion 21 and another predetermined member is mounted to the second mounting portion 31. This can improve the durability of the speed reducer 10.

The seal 60 is provided between the first case 20 and the second case 30. This configuration prevents fluids such as hydraulic oil or rain and foreign matter such as dirt from passing through the gap between the first case 20 and the second case 30. Since the first case 20 and the second case 30 share the seal 60, the number of the seals can be minimized.

### <Second Embodiment>

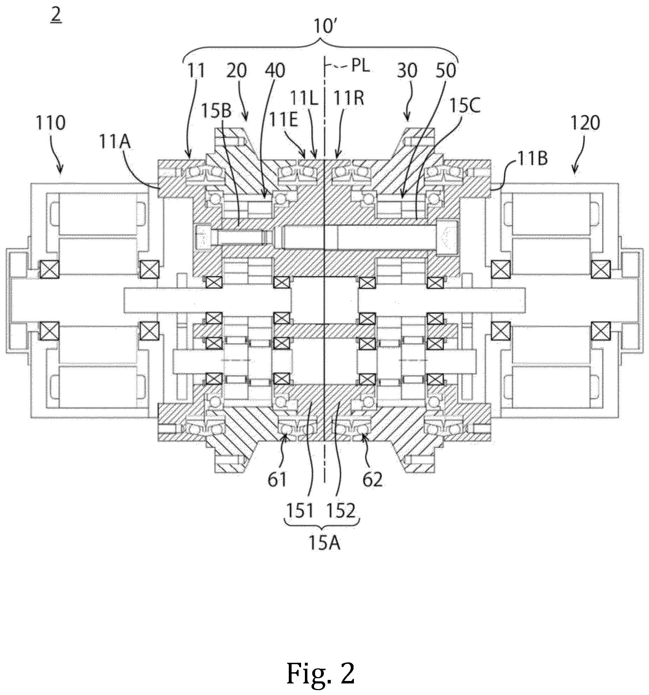

The following describes a drive device 2 including a speed reducer 10' according to the second embodiment with reference to Fig. 2. The constituents of this embodiment identical to those of the first embodiment will be denoted by the same reference signs, and redundant description of such constituents will be omitted. In the second embodiment, the carrier 11 in the speed reducer 10' is configured in a different manner than in the first embodiment.

In this embodiment, a partition line PL extending in the radial direction of the base portion 15A is formed on the base portion 15A of the connecting portion 15. The carrier 11 includes a first carrier half 11L and a second carrier half 11R that are separably connected at the partition line PL. The first carrier half 11L includes the first end surface 11A. The second carrier half 11R includes the second end surface 11B.

Specifically, the base portion 15A in the connecting portion 15 includes a first side portion 151 and a second side portion 152 that can be separated at the partition line PL. The first column portion 15B is integrated with the first side portion 151. The second column portion 15C is integrated with the second side portion 152. The first carrier half 11L is composed of the first side portion 151, the first column portion 15B, and the first end plate 13. The second carrier half 11R is composed of the second side portion 152, the second column portion 15C, and the second end plate 14. The partition line PL is located at a position where it does not intersect with the first reduction portion 40 and the second reduction portion 50. The first carrier half 11L holds the first reduction portion 40. The second carrier half 11R holds the second reduction portion 50.

In this embodiment, the first carrier half 11L and the second carrier half 11R are connected together by a fastening member inserted through the second end surface 11B into the second column portion 15C, the second side portion 152, and the first side portion 151. It is also possible that the first carrier half 11L and the second carrier half 11R are connected together by a fastening member inserted from the first end surface 11A.

Further, in this embodiment, the carrier 11 includes an exposed portion 11E that is exposed through the gap between the first case 20 and the second case 30. The exposed portion 11E is constituted by the outer circumferential part of the first side portion 151 and the outer circumferential part of the second side portion 152. The outer circumferential part of the first side portion 151 and the outer circumferential part of the second side portion 152, which constitute the exposed portion 11E, are located between the end surface of the first case 20 and the end surface of the second case opposed to each other. A first side seal 61 is provided between the outer circumferential part of the first side portion 151 and the end surface of the first case 20. A second side seal 62 is provided between the outer circumferential part of the second side portion 152 and the end surface of the second case 30. The first side seal 61 and the second side seal 62 may be floating seals as shown, but their form is not particularly limited.

In the second embodiment, the carrier 11 includes a first carrier half 11L holding the first reduction portion 40 and a second carrier half 11R holding the second reduction portion 50, which are separably connected. This configuration facilitates work during assembly and disassembly, for example. The exposed portion 11E, which is a part of the carrier 11, is exposed through the gap between the first case 20 and the second case 30. In this configuration, the exposed portion 11E can be used as a support point for the speed reducer 10', improving the stability in supporting the speed reducer 10'.

### <Third Embodiment>

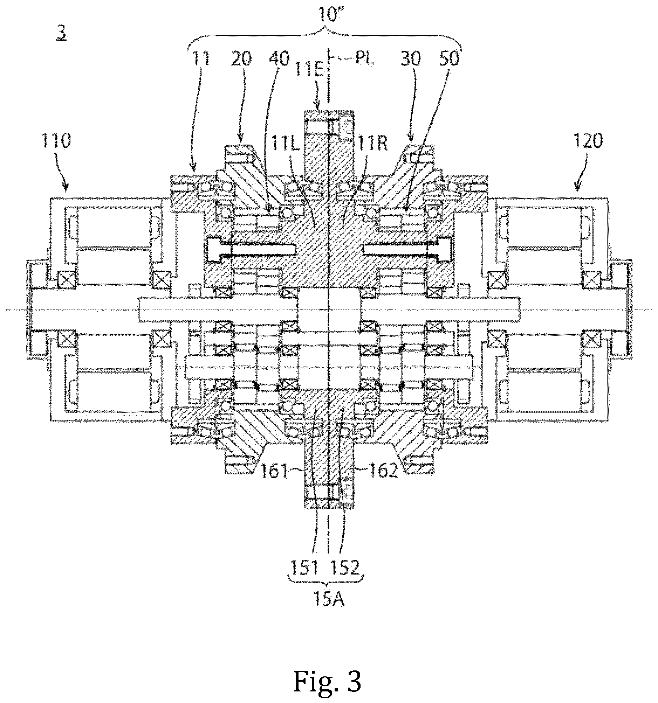

The following describes a drive device 3 including a speed reducer 10" according to the third embodiment with reference to Fig. 3. The constituents of this embodiment identical to those of the first and second embodiments will be denoted by the same reference signs, and redundant description of such constituents will be omitted. In the third embodiment, the carrier 11 in the speed reducer 10" is configured in a different manner than in the first and second embodiments.

As in the second embodiment, the carrier 11 according to this embodiment includes the first carrier half 11L and the second carrier half 11R that are separably connected at the partition line PL. However, there is a difference from the second embodiment in that the exposed portion 11E in the carrier 11 projects from the first case 20 and the second case 30.

Specifically, the first carrier half 11L includes a first flange 161 extending from the gap between the first case 20 and the second case 30 in the radially outward direction of the first case 20 relative to the first case 20 and in the radially outward direction of the second case 30 relative to the second case 30. The first flange 161 is formed on the first side portion 151. The second carrier half 11R includes a second flange 162 extending from the gap between the first case 20 and the second case 30 in the radially outward direction of the first case 20 relative to the first case 20 and in the radially outward direction of the second case 30 relative to the second case 30. The second flange 162 is formed on the second side portion 152. The outside in the radial direction refers to the side away from the center in the radial direction. The inside in the radial direction refers to the side toward the center in the radial direction.

In this embodiment, the first flange 161 and the second flange 162 constitute the exposed portion 11E. The first carrier half 11L and the second carrier half 11R are connected together by a fastening member that extends from the first flange 161 to the second flange 162. The position through which the fastening member passes is radially outside the outer circumferential surface of the first case 20 and radially outside the outer circumferential surface of the second case 30.

In the third embodiment, the position at which the first carrier half 11L and the second carrier half 11R are fastened together can be located in the outer periphery of the first reduction portion 40 and the second reduction portion 50. This makes it easy to fabricate a structure in which the first carrier half 11L and the second carrier half 11R can be connected together, for example, after the components constituting the first reduction portion 40 are built into the first carrier half 11L, and the components constituting the second reduction portion 50 are built into the second carrier half 11R. This allows for easy assembly of the speed reducer 10". In addition, the first flange 161 and the second flange 162 can be used as the support points for the speed reducer 10", improving the stability in supporting the speed reducer 10".

### <Construction Machine (1)>

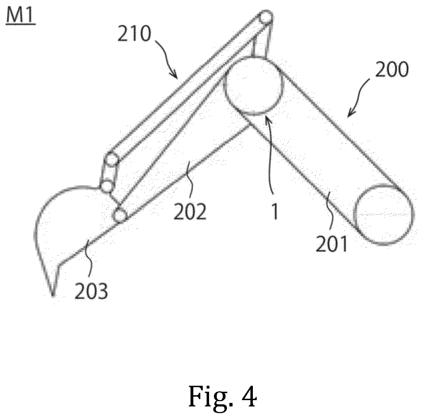

Fig. 4 illustrates a construction machine M1 including the drive device 1 according to the first embodiment. The construction machine M1 shown in Fig. 4 is an excavator. The construction machine M1 includes a working element 200 that is connected to the main body (not shown) of the construction machine. The construction machine M1 may include the drive device 2 according to the second embodiment or the drive device 3 according to the third embodiment.

The working element 200 includes a boom 201, an arm 202, and a bucket 203. The proximal part of the boom 201 is rotatably connected to the main body of the construction machine. The proximal part of arm 202 is connected to the distal part of the boom 201. The proximal part of the bucket 203 is connected to the distal part of the arm 202.

In the construction machine M1, the drive device 1 is mounted to the distal part of the boom 201. In this embodiment, by way of an example, the boom 201 includes a pair of side plates opposed to each other and extending in the longitudinal direction of the boom 201, and a connecting plate that connects the pair of side plates. Referring to Fig. 1, the distal part of one of the pair of side plates supports the first end plate 13 of the carrier 11, and the distal part of the other of the pair of side plates supports the second end plate 14 of the carrier 11.

In the construction machine M1, the proximal part of the arm 202 is connected to the first case 20. This causes the arm 202 to rotate around the connection point between the arm 202 and the boom 201 as the first case 20 rotates. The bucket 203 is rotatably connected to the distal part of the arm 202 via bearings or other means. The bucket 203 is also connected to the second case 30 via a first link device 210. In the example shown, the bucket 203 rotates around the connection point between the bucket 203 and the arm 202 when the first link device 210 is pushed and pulled as the second case 30 rotates. In the example shown, the first link device 210 is constituted by three links connected in series. One link is rotatably connected to one end of the middle link, and the other link is rotatably connected to the other end of the middle link. In other words, the construction machine M1 includes the speed reducer 10 in the working element 200.

In the speed reducer 10 of the drive device 1, which is located at the connection point between the boom 201 and the arm 202 of the construction machine M1, the first case 20 and the second case 30 are both held by the outer circumferential surface 11C of the carrier 11. This reduces the region occupied by the speed reducer 10 and the drive device 1. Therefore, the amount of projection of the drive device 1 from the boom 201 and the arm 202 is reduced. This minimizes the risk of the drive device 1 contacting with the ground or structures on which the construction machine M1 is working, and minimizes the risk of the drive device 1 being damaged.

By way of an example, the boom 201 includes a pair of side plates opposed to each other and extending in the longitudinal direction of the boom 201, the distal part of one of the pair of side plates supports the first end plate 13 of the carrier 11, and the distal part of the other of the pair of side plates supports the second end plate 14 of the carrier 11. In this case, the speed reducer 10 having a large weight is supported by the boom 201 on both sides thereof. Therefore, the speed reducer 10 and the drive device 1 can be supported more stably. In the example shown in Fig. 4, the first portion in the present invention corresponds to the boom 201, the second portion corresponds to the arm 202, and the third portion corresponds to the bucket 203.

### <Construction Machine (2)>

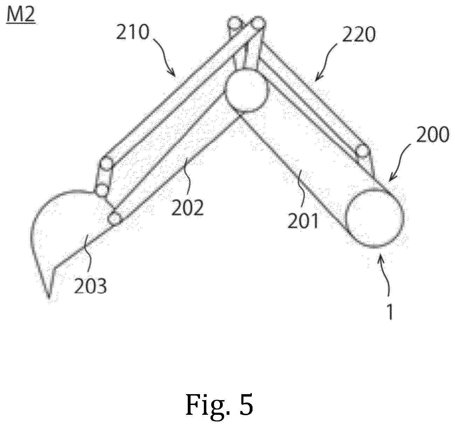

Fig. 5 illustrates a construction machine M2 including the drive device 1 according to the first embodiment. The construction machine M2 shown in Fig. 5 is an excavator. In the construction machine M2, the drive device 1 is mounted to the main body (not shown) of the construction machine. The proximal part of the boom 201 is connected to the first case 20. This causes the boom 201 to rotate around the connection point between the boom 201 and the main body of the construction machine as the first case 20 rotates. The arm 202 is rotatably connected to the distal part of the boom 201 via bearings or other means. The arm 202 is also connected to the second case 30 via a second link device 220. In the example shown, the arm 202 rotates when the second link device 220 is pushed and pulled as the second case 30 rotates. In the construction machine M2, the bucket 203 is connected to another drive device located at the connection point between the boom 201 and the arm 202 by the first link device 210 shown in Fig. 4.

The construction machine M2 produces the same effect as the construction machine M1 described with reference to Fig. 4. In the example shown in Fig. 5, the one-side portion in the present invention corresponds to the boom 201, and the other-side portion corresponds to the arm 202.

Aspects of the invention are not limited to the foregoing embodiments and embrace various modifications conceivable by those skilled in the art. Advantageous effects of the invention are also not limited to those described above. In other words, various additions, modifications, and partial deletions are possible in a range not departing from the conceptual ideas and spirit of the present invention derived from contents defined in the claims and the equivalents thereof. In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

For example, in the embodiments described above, a portion of the outer circumferential surface of the first center shaft 41 is fitted into the hole 114 in the rotating shaft 113 of the first motor 110. The hole 114 and the first center shaft 41 are connected so that they do not rotate relative to each other. Alternatively, it is also possible that the first center shaft 41 has a hole extending axially from its end surface, and the rotating shaft 113 is inserted into this hole. In this case, the first center shaft 41 still corresponds to the first input portion.

It is also possible that the first reduction portion 40 in the speed reducer 10 does not include the first center shaft 41 and the first input gear 42. In this case, a drive gear on the rotating shaft 113 of the first motor 110 may be meshed with the first relay gear 44 to transmit rotation. In this case, the first relay gear 44, which is the driven gear, corresponds to the first input portion.

### LIST OF REFERENCE NUMBERS

1, 2, 3: drive device, 10, 10', 10": speed reducer, 11: carrier, 11A: first end surface, 11B: second end surface, 11C: outer circumferential surface, 11C1: first support surface, 11C2: second support surface, 11L: first carrier half, 11R: second carrier half, 11E: exposed portion, 12A: first bearing, 12B: second bearing, 13: first end plate, 131: outer support surface, 132: first motor mounting portion, 133: first outer crankshaft support hole, 14: second end plate, 141: outer support surface, 142: second motor mounting portion, 143: second outer crankshaft support hole, 15: connecting portion, 15A: base portion, 15A1, 15A2: inner support surface, 15A3: inner crankshaft support hole, 15B: first column portion, 15C: second column portion, 151: first side portion, 152: second side portion, 161: first flange, 162: second flange, 20: first case, 21: first mounting portion, 21A: fastening hole, 22: first groove, 30: second case, 31: second mounting portion, 31A: fastening hole, 32: second groove, 40: first reduction portion, 41: first center shaft, 42: first input gear, 43: first crankshaft, 44: first relay gear, 45: first external gear, 50: second reduction portion, 51: second center shaft, 52: second input gear, 53: second crankshaft, 54: second relay gear, 55: second external gear, 60: seal, 61: first side seal, 62: second side seal, 110: first motor, 111: stator, 112: rotor, 113: rotating shaft, 114: hole, 120: second motor, 121: stator, 122: rotor, 123: rotating shaft, 124: hole, C1: first rotation axis, C2: second rotation axis, FS: first side, SS: second side, M1, M2: construction machine, 200: working element, 201: boom, 202: arm, 203: bucket, 210: first link device, 220: second link device

## Claims

1. A speed reducer comprising:
a carrier;
a first case encircling an outer circumferential surface of the carrier between two end surfaces of the carrier, the first case being held by the carrier between the two end surfaces of the carrier so as to rotate relative to the carrier;
a second case encircling the outer circumferential surface of the carrier, the second case being held by the carrier at a different position between the two end surfaces of the carrier than the first case so as to rotate relative to the carrier;
a first reduction portion including a first input portion, the first input portion being held by the carrier and configured to receive rotation input from a first side toward which one of the two end surfaces of the carrier faces, the first reduction portion being configured to reduce the rotation input to the first input portion and output the reduced rotation to the first case; and
a second reduction portion including a second input portion, the second input portion being held by the carrier and configured to receive rotation input from a second side toward which another of the two end surfaces of the carrier faces, the second reduction portion being configured to reduce the rotation input to the second input portion and output the reduced rotation to the second case.

2. The speed reducer of claim 1, wherein a first rotation axis of the first case that rotates relative to the carrier and a second rotation axis of the second case that rotates relative to the carrier are aligned with each other.

3. The speed reducer of claim 1,
wherein the first case is located between the two end surfaces of the carrier, and
wherein the second case is located between the two end surfaces of the carrier.

4. The speed reducer of claim 1, wherein the carrier includes a first carrier half and a second carrier half that are separably connected, the first carrier half holding the first reduction portion, the second carrier half holding the second reduction portion.

5. The speed reducer of claim 4,
wherein the first carrier half includes a first flange extending from a gap between the first case and the second case in a radially outward direction of the first case relative to the first case and in a radially outward direction of the second case relative to the second case,
wherein the second carrier half includes a second flange extending from the gap between the first case and the second case in the radially outward direction of the first case relative to the first case and in the radially outward direction of the second case relative to the second case, and
wherein the first carrier half and the second carrier half are connected together by a fastening member that extends from the first flange to the second flange.

6. The speed reducer of claim 1, wherein a part of the carrier is exposed through a gap between the first case and the second case.

7. The speed reducer of claim 1,
wherein the first case includes a first mounting portion located between the one of the end surfaces of the carrier and a surface of the first case facing toward the second case, the first mounting portion receiving a predetermined member mounted thereto, and
wherein the second case includes a second mounting portion located between the other of the end surfaces of the carrier and a surface of the second case facing toward the first case, the second mounting portion receiving a predetermined member mounted thereto.

8. The speed reducer of claim 1, further comprising a seal provided between the first case and the second case.

9. The speed reducer of claim 1, wherein the first input portion is a shaft member or a driven gear supported by the carrier.

10. A drive device comprising:
the speed reducer of any one of claims 1 to 9;
a first motor configured to input rotation to the first input portion of the first reduction portion; and
a second motor configured to input rotation to the second input portion of the second reduction portion.

11. A construction machine comprising a working element including the speed reducer of claim 1.

12. The construction machine of claim 11,
wherein the working element includes a first portion, a second portion, and a third portion,
wherein the first portion holds the speed reducer, the second portion is mounted to the first case, and the third portion is rotatably supported by the second portion, and
wherein the third portion is connected to the second case via a link device.

13. A construction machine comprising:
the speed reducer of any one of claims 1 to 9; and
a working element connected to the speed reducer.

14. The construction machine of claim 11,
wherein the working element includes a one-side portion and an other-side portion, the one-side portion being mounted to the first case and extending in a radially outward direction of the first case, the other-side portion being rotatably supported by the one-side portion, and
wherein the other-side portion is connected to the second case via a link device.
